# EUROPEAN PATENT APPLICATION

(11) **EP 3 792 217 A1**
(43) Date of publication of application: **17.03.2021**
(21) Application number: 19196727.2
(22) Date of filing: 11.09.2019
(51) Int. Cl.: C01B 3/38, B01D 19/00, C01B 3/48, C02F 9/00

(54) **STEAM-PRODUCING PROCESS AND SYSTEM**

(71) Applicant: Air Products and Chemicals, Inc., Allentown, PA 18195-1501 (US)
(72) Inventor: Beldon, Alyson Sagle, St. Louis, MO Missouri 63132 (US); Genkin, Eugene S., Allentown, PA Pennsylvania 18104 (US)
(74) Representative: SSM Sandmair

(57) **Abstract**

System and process for producing steam in a steam-hydrocarbon reforming facility where oxygen is removed from demineralized water using a membrane degasifier. The membrane degasifier operates at a lower temperature compared to a deaerator, which is the conventional technology for removing oxygen.

## Description

### BACKGROUND

The present disclosure relates to making steam in steam-hydrocarbon reforming facilities.

The catalytic steam-hydrocarbon reforming process is a large consumer of water in the form of steam. Roughly 5 kg of water is consumed for every kg of hydrogen produced. Steam is made from the boiler feed water for use in catalytic steam reforming processes. Boiler feed water must be specially prepared to avoid corrosion of the process equipment handling the boiler feed water and steam.

As quoted from Mark's Mechanical Engineers Handbook, 6th Edition, Theodore Baumeister, Editor, McGraw-Hill Book Company, 1958, p. 6-126:
"Non-condensible gases released from water in boilers are probably the greatest single cause of corrosion in boiler tubes, drums, economizers, and superheaters. Oxygen corrosion produces rapid pitting, and it is recognized that the rate of corrosion is directly proportional to the dissolved oxygen concentration of the feed water. Other dissolved gases, such as carbon dioxide, hydrogen sulphide, and compounds which release gaseous products also accelerate the rate of attack at high pressures and temperatures.
The removal of gases from feed water is effected in modern steam stations by mechanical (vacuum) and thermal deaeration, by the addition of chemicals, or by a combination of those processes. The basic method is to heat the water by direct contact with steam in either open heaters or in the more efficient type known as deaerating heaters. In general the water is sprayed, atomized, or trickled over a stack of metal trays, to present the largest possible surface, while steam is admitted and directed so as to sweep out the non-condensible gases as they flash out of solution. By use of steam at not less than 5 psi (227 F), efficient distribution, and liberal venting through a vent condenser, residual oxygen can be reduced to 0.005 ml per liter."

Demineralized make-up water in a steam-hydrocarbon reforming facility is typically processed in a deaerator vessel where dissolved gases, such as oxygen and carbon dioxide are removed by counter flow against steam in the stripping section of the deaerator.

Degasification using a deaerator requires steam, so some energy and water is wasted with the steam vented to the atmosphere from the deaerator. Demineralized feed water is preheated before entering the deaerator, thus requiring additional heat integration, typically with the process gas (reformate) stream. Also, use of a deaerator requires significant installation work. Deaerator vessels are generally 12-15 meters tall. The stripping section of a deaerator has packing or trays that are typically loaded or installed in the field.

Industry desires improved systems for making steam in steam-hydrocarbon reforming facilities.

Industry desires energy efficient systems for making steam in steam-hydrocarbon reforming facilities.

Industry desires lower cost systems with fewer and reliable components for making steam in steam-hydrocarbon reforming facilities.

Industry desires to avoid corrosion in systems for making steam in steam-hydrocarbon reforming facilities.

### BRIEF SUMMARY

The present disclosure relates to a process and system for producing steam in a steam-hydrocarbon reforming facility. The steam-hydrocarbon reforming facility may produce hydrogen and/or synthesis gas.

There are several aspects of the invention as outlined below. In the following, specific aspects of the invention are outlined below. The reference numbers and expressions set in parentheses are referring to an example embodiment explained further below with reference to the figures. The reference numbers and expressions are, however, only illustrative and do not limit the aspect to any specific component or feature of the example embodiment. The aspects can be formulated as claims in which the reference numbers and expressions set in parentheses are omitted or replaced by others as appropriate.

Aspect 1. A process for producing steam in a steam-hydrocarbon reforming facility (i.e. facility that produces hydrogen and/or synthesis gas), the process comprising:
cooling a reformate (25) containing water in an amount effective to condense at least a portion of the water in the reformate (25) and thereby forming condensed water and water-depleted reformate;
separating the condensed water from the water-depleted reformate in a separator (90) thereby forming a water-depleted reformate gas (95) and a process (water) condensate (96), the process condensate (96) formed from the condensed water;
passing the process condensate (96) to a steam stripping unit (110, 210) (e.g. a deaerator or a process condensate stripper), stripping at least CO₂ from the process condensate (96), and withdrawing a CO₂₋depleted process condensate (97, 197) from the steam stripping unit (110, 210);
passing the CO₂-depleted process condensate (97, 197) to a steam drum (120, 221) to produce a product steam (127, 227);
passing demineralized make-up water (85) to a membrane separation unit (50) to remove at least O₂ from the demineralized make-up water to form an O₂-depleted demineralized make-up water (86); and
passing a first portion (88) or all of the O₂-depleted demineralized make-up water (86) to the steam drum (120, 221) to produce the product steam (127, 227);
wherein the CO₂-depleted process condensate (97, 197) and the O₂-depleted demineralized make-up water (86) are each heated by indirect heat exchange with reformate prior to being introduced into the steam drum (120, 221).

Aspect 2. The process as in aspect 1 wherein not all of the O₂-depleted demineralized make-up water is passed to the steam drum (120, 221), the process further comprising:
passing a second portion (87) of the O₂-depleted demineralized make-up water to a second steam drum (121) to produce a second product steam (125).

Aspect 3. The process as in aspect 2 wherein at least a portion of the second product steam (125) is exported from the steam-hydrocarbon reforming facility. (i.e. at least a portion of the second product steam is export steam.)

Aspect 4. The process as in aspect 2 or aspect 3 wherein no CO₂-depleted process condensate is passed to the second steam drum (121).

Aspect 5. The process as in any one of aspects 1 to 4 wherein no CO₂-depleted process condensate is passed to the membrane separation unit (50).

Aspect 6. The process as in any one of aspects 1 to 5 wherein the first portion (88) or all of the O₂-depleted demineralized make-up water (86) and the CO₂-depleted process condensate (97, 197) are combined before being heated by indirect heat exchange with the reformate (25).

Aspect 7. The process as in any one of aspects 1 to 5 wherein the portion or all of the O₂-depleted demineralized make-up water (86) and the CO₂-depleted process condensate (97, 197) are heated separately by indirect heat exchange with the reformate (25) prior to being introduced into the steam drum (120, 221).

Aspect 8. The process as in any one of aspects 1 to 7 wherein the membrane separation unit (50) comprises membranes having a gas side and a liquid side, wherein the demineralized make-up water contacts the liquid side and the O₂ is removed from the gas side, the process further comprising
purging the gas side of the membranes with a sweep gas (51).

Aspect 9. The process as in aspect 8 wherein the sweep gas is nitrogen.

Aspect 10. The process as in aspect 8 or aspect 9 further comprising:
evacuating the gas side of the membranes to an absolute pressure less than 13.32 kPa (100 mm Hg) or less than 6.66 kPa (50 mm Hg).

Aspect 11. The process as in any one of aspects 1 to 7 wherein the membrane separation unit comprises membranes having a gas side and a liquid side, wherein the demineralized make-up water contacts the liquid side and the O₂ is removed from the gas side, the process further comprising
evacuating the gas side of the membranes to an absolute pressure less than 13.32 kPa (100 mm Hg) or less than 6.66 kPa (50 mm Hg).

Aspect 12. The process as in any one of aspects 7 to 11 wherein the membranes are hollow fiber membranes.

Aspect 13. The process as in any one of aspects 1 to 12 wherein all or a portion of the product steam (127, 227) and/or all or a portion of the second product steam (125) of aspect 2 is/are mixed with hydrocarbon feedstock (76) to form a reformer feedgas mixture (15) and the reformer feedgas mixture (15) is reacted in a catalytic steam reformer (10) of the steam-hydrocarbon reforming facility to form the reformate (25).

Aspect 14. A steam system in a steam-hydrocarbon reforming facility, the steam system comprising:
a separator (90) for separating condensed water from a reformate that contains water to form a water-depleted reformate gas and a process (water) condensate from the reformate;
a steam stripping unit (110, 210) for stripping CO₂ from the process condensate from the separator (90) to form a CO₂-depleted process condensate and a CO₂-containing by-product (218, 18);
a membrane separation unit (50) for removing O₂ from demineralized make-up water (85) to form O₂-depleted demineralized make-up water;
one or more heat exchangers (70) for heating the CO₂-depleted process condensate from the steam stripping unit (110, 210) and the O₂-depleted demineralized make-up water from the membrane separation unit (50) by indirect heat exchange with the reformate; and
a steam drum (120, 221) for producing a product steam (127, 227) from the CO₂-depleted process condensate and a first portion or all of the O₂-depleted demineralized make-up water from the one or more heat exchangers (70).

Aspect 15. The steam system as in aspect 14 further comprising:
a second steam drum (121) for producing a second product stream (125) from a second portion of the O₂-depleted demineralized make-up water from the one or more heat exchangers (70).

Aspect 16. The steam system as in aspect 14 or aspect 15 wherein the membrane separation unit comprises membranes having a gas side and a liquid side, wherein the demineralized make-up water contacts the liquid side and the O₂ is removed from the gas side, the steam system further comprising
a sweep gas source, preferably a nitrogen source, wherein the gas side of the membranes is in fluid flow communication with the sweep gas source.

Aspect 17. The steam system as in any one of aspects 14 to 16 wherein the membrane separation unit comprises membranes having a gas side and a liquid side, wherein the demineralized make-up water contacts the liquid side and the O₂ is removed from the gas side, the steam system further comprising
a vacuum-producing unit, wherein the gas side of the membranes is in fluid flow communication with the vacuum-producing unit.

Aspect 18. The steam system as in aspect 16 or aspect 17 wherein the membranes are hollow fiber membranes.

Aspect 19. The steam system as in any one of aspect 14 to 18 wherein the steam drum (120, 221) is in fluid flow communication with a catalytic steam reactor (10) of the steam-hydrocarbon reforming facility for passing at least a portion of the product steam (127, 227) to the catalytic steam reactor (10).

### BRIEF DESCRIPTION OF SEVERAL VIEWS OF THE DRAWINGS

FIG. 1 is a process flow diagram for a steam-hydrocarbon facility that includes an integrated steam system.
FIG. 2 is a process flow diagram for a steam-hydrocarbon facility that includes a segregated steam system.

### DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from the scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

In this specification, unless expressly otherwise indicated, the word 'or' is used in the sense of an operator that returns a true value when either or both of the stated conditions are met, as opposed to the operator 'exclusive or' which requires only that one of the conditions is met.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

The phrase "at least a portion" means "a portion or all." The at least a portion of a stream may have the same composition with the same concentration of each of the species as the stream from which it is derived. The at least a portion of a stream may have a different concentration of species than that of the stream from which it is derived. The at least a portion of a stream may include only specific species of the stream from which it is derived.

As used herein, "first," "second," "third," etc. are used to distinguish from among a plurality of steps and/or features, and is not indicative of the total number, or relative position in time and/or space unless expressly stated as such.

The terms "depleted" or "lean" mean having a lesser mole % concentration of the indicated component than the original stream from which it was formed. "Depleted" does not mean that the stream is completely lacking the indicated component.

The terms "rich" or "enriched" mean having a greater mole % concentration of the indicated component than the original stream from which it was formed.

As used herein, "indirect heat transfer" or "indirect heat exchange" is heat transfer from one stream to another stream where the streams are not mixed together. Indirect heat transfer includes, for example, transfer of heat from a first fluid to a second fluid in a heat exchanger where the fluids are separated by plates or tubes. Indirect heat transfer includes transfer of heat from a first fluid to a second fluid where an intermediate working fluid is used to carry the heat from the first fluid to the second fluid. The first fluid may evaporate a working fluid, e.g. water to steam, in an evaporator, the working fluid passed to another heat exchanger or condenser, where the working fluid transfers heat to the second fluid. Indirect heat transfer from the first fluid to a second fluid using a working fluid may be accommodated using a heat pipe, thermosyphon, kettle boiler, or the like.

As used herein, "direct heat transfer" or "direct heat exchange" is heat transfer from one stream to another stream where the streams are intimately mixed together. Direct heat transfer includes, for example, humidification where water is sprayed directly into a hot air stream and the heat from the air evaporates the water.

As used herein, "in fluid flow communication" means operatively connected by one or more conduits, manifolds, valves and the like, for transfer of fluid. A conduit is any pipe, tube, passageway or the like, through which a fluid may be conveyed. An intermediate device, such as a pump, compressor or vessel may be present between a first device in fluid flow communication with a second device unless explicitly stated otherwise.

Illustrative embodiments of the invention are described below. While the invention is susceptible to various modifications and alternative forms, specific embodiments thereof have been shown by way of example in the drawings and are herein described in detail. It should be understood, however that the description herein of specific embodiments is not intended to limit the invention to the particular forms disclosed, but on the contrary, the invention is to cover all modifications, equivalents, and alternatives falling within the scope of the invention as defined by the appended claims.

The present disclosure relates to a process and system for producing steam in a steam-hydrocarbon reforming facility. The steam-hydrocarbon reforming facility may produce hydrogen and/or synthesis gas.

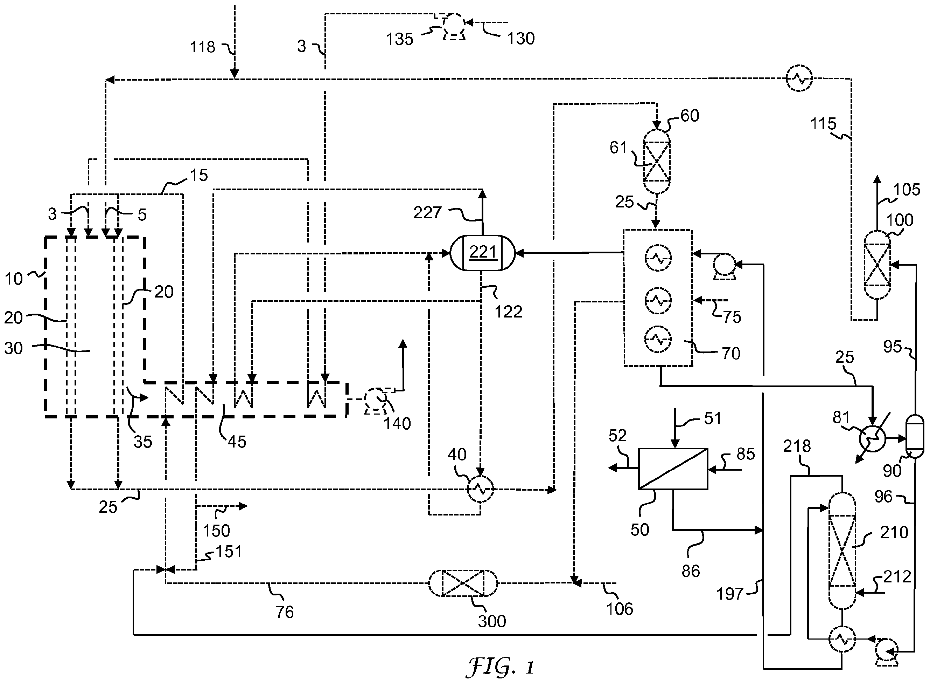

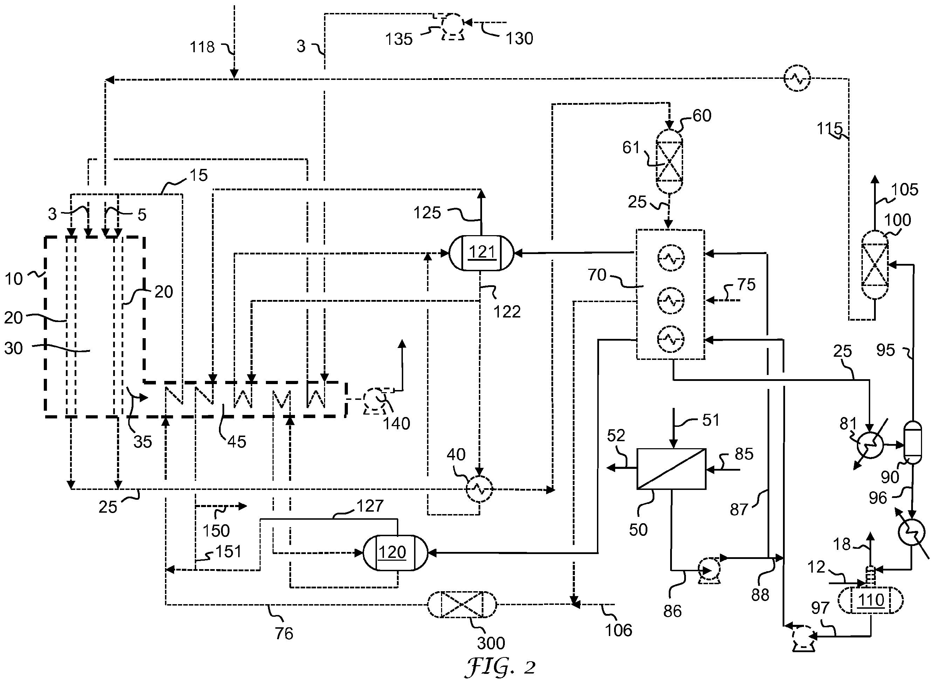

Referring now to the drawings, wherein like reference numbers refer to like elements throughout the several views, FIG. 1 illustrates an integrated steam system in a steam-hydrocarbon reforming facility, and FIG. 2 illustrates a segregated steam system in a steam-hydrocarbon reforming facility. A segregated steam system is one where at least two steam drums are used in order to prevent steam made from condensate from becoming export steam by segregating the boiler feed water formed from condensate. Steam made from condensate is mixed with the feedstock hydrocarbon and reacted in the reformer. In an integrated steam system boiler feed water made from condensate is "cleaned" sufficiently and is used both as a reactant in the reformer and as export steam.

The steam-hydrocarbon reforming facility may utilize catalytic steam-hydrocarbon reforming. Catalytic steam-hydrocarbon reforming, also called steam methane reforming (SMR), catalytic steam reforming, or steam reforming, is defined as any process used to convert reformer feedstock into reformate by reaction with steam over a catalyst. Reformate, also called synthesis gas, or syngas, as used herein is any mixture comprising hydrogen and carbon monoxide. The reforming reaction is an endothermic reaction and may be described generally as CₙHₘ + n H₂O → n CO + (m/2 + n) H₂. Hydrogen is generated when reformate is generated.

A brief description of the steam-hydrocarbon reforming facility is given to provide context for the integrated steam system in FIG. 1, and the segregated steam system in FIG. 2, each steam system which is part of the steam-hydrocarbon reforming facility.

As shown in FIG. 1 and FIG. 2, a reformer feed gas mixture 15 is introduced into a plurality of catalyst-containing reformer tubes 20 in a reformer furnace 10, the reformer feed gas mixture 15 is reacted in a reforming reaction under reaction conditions effective to form a reformate 25 comprising H₂, CO, CH₄, and H₂O, and the reformate 25 is withdrawn from the plurality of catalyst-containing tubes 20 of the reformer furnace 10.

The reformer feed gas mixture 15 may be any feed gas mixture suitable for introducing into a catalytic steam-hydrocarbon reformer for forming a reformate. The reformer feed gas mixture 15 may comprise a hydrocarbon feedstock 75 that has been desulphurized and steam 151 (and steam 127 in FIG. 2), and/or a mixture of prereformed hydrocarbon feedstock and steam. Hydrocarbon feedstock may be natural gas, methane, naphtha, propane, refinery fuel gas, refinery off-gas, or other suitable reformer feedstock known in the art. Prereformed hydrocarbon feedstock is produced in a prereformer (not shown).

The reforming reaction takes place inside the plurality of catalyst-containing reformer tubes 20 in reformer furnace 10. A reformer furnace, also called a catalytic steam reformer, steam-methane reformer, and steam-hydrocarbon reformer, is defined herein as any fired furnace used to convert feedstock containing elemental hydrogen and carbon into reformate by a reaction with steam over a catalyst with heat provided by combustion of a fuel.

Reformer furnaces with a plurality of catalyst-containing reformer tubes, i.e. tubular reformers, are well-known in the art. Any suitable number of catalyst-containing reformer tubes may be used. Suitable materials and methods of construction are known. Catalyst in the catalyst-containing reformer tubes may be any suitable catalyst known in the art, for example, a supported catalyst comprising nickel.

The reaction conditions effective to form the reformate 25 in the plurality of catalyst-containing reformer tubes 20 may comprise a temperature ranging from 500°C to 950°C and a pressure ranging from 203 kPa to 5,066 kPa (absolute). The reaction condition temperature may be as measured by any suitable temperature sensor, for example a type J thermocouple. The reaction condition pressure may be as measured by any suitable pressure sensor known in the art, for example a pressure gauge as available from Mensor.

The reformate 25 may exchange heat with a number of streams and may then be passed to a shift reactor 60 containing shift catalyst 61. In the exemplary embodiments shown in FIGS. 1 and 2, the reformate 25 withdrawn from the plurality of catalyst-containing reformer tubes 20 is passed to heat exchanger 40 (a so-called waste heat boiler) where the reformate 25 heats a portion of boiler feed water stream 122 thereby forming a two-phase water and steam stream that is reintroduced into steam drum 221 (FIG. 1) or steam drum 121 (FIG. 2).

In the exemplary embodiments shown in FIGS. 1 and 2, reformate 25 is passed from heat exchanger 40 to shift reactor 60. The steam-hydrocarbon reforming process may comprise reacting the reformate 25 from heat exchanger 40 in the presence of a shift catalyst 61 under reaction conditions effective to form additional hydrogen in the reformate 25. Additional hydrogen gas may be obtained by the catalytic reaction of carbon monoxide and steam. This reaction is exothermic and is commonly referred to as the water-gas shift reaction or shift reaction: CO+H₂O→CO₂ +H₂. The reaction is affected by passing carbon monoxide and water through a bed of a suitable catalyst. The reaction conditions effective to form additional hydrogen in the reformate 25 may comprise a second temperature ranging from 190°C to 450°C and a second pressure ranging from 203 kPa to 5,066 kPa (absolute).

Any suitable shift catalyst may be used. The shift reactor may be a so-called high temperature shift (HTS), low temperature shift (LTS), medium temperature shift (MTS), or combination. One or more shift reactors may be used.

As shown in the exemplary embodiments in FIGS. 1 and 2, after passing through the shift reactor 60, the reformate 25 may be passed to a heat exchanger network 70 where the reformate 25 heats various streams and is itself cooled. Hydrocarbon feedstock 75, and various boiler feed water streams are heated in heat exchanger network 70.

The hydrocarbon feedstock 75 after being heated by indirect heat transfer with at least a portion of the reformate from the shift reactor 60 may be passed to hydrodesulphurization unit 300 to remove sulfur from the hydrocarbon feedstock. As is well-known in the art, sulfur may poison catalyst in the process. Hydrogen 106 for hydrodesulphurization may be added to the feedstock before or after heating the hydrocarbon feedstock 75. Hydrogen product 105 may used to provide hydrogen 106. At least a portion 76 of the desulphurized feedstock may be blended with steam 151, (also steam 127 in FIG. 2) and then further heated by combustion product gas 35 in the convection section 45 of reformer furnace 10 prior to being introduced into the catalyst-containing reformer tubes 20 as reformer feed gas mixture 15.

A fuel 5 may be combusted with an oxidant gas 3 in a combustion section 30 of the reformer furnace 10 external to the plurality of catalyst-containing reformer tubes 20 under conditions effective to combust the fuel 5 to form a combustion product gas 35 comprising CO₂ and H₂O. Any suitable burner may be used to introduce the fuel 5 and the oxidant gas 3 into the combustion section 30. Combustion of the fuel 5 with the oxidant gas 3 generates heat to supply energy for reacting the reformer feed gas mixture 15 inside the plurality of catalyst-containing reformer tubes 20. The combustion product gas 35 is withdrawn from the combustion section 30 of the reformer furnace 10 and passed to the convection section 45 of the reformer furnace to supply heat to other process streams. The combustion section (also called the radiant, radiation, or radiative section) of the reformer furnace is that part of the reformer furnace containing the plurality of catalyst-containing reformer tubes. The convection section of the reformer furnace is that part of the reformer furnace containing heat exchangers other than the plurality of catalyst-containing reformer tubes. The heat exchangers in the convection section may be for heating process fluids other than reformate, such as water/steam, air, pressure swing adsorption unit by-product gas, reformer feed gas prior to introduction into the catalyst-containing reformer tubes, etc.

Conditions effective to combust the fuel may comprise a furnace temperature ranging from 600°C to 1500°C and a pressure ranging from 99 kPa to 101.4 kPa (absolute). Flame temperatures are generally higher. The temperature may be as measured by a thermocouple, an optical pyrometer, or any other calibrated temperature measurement device known in the art for measuring furnace temperatures. The pressure may be as measured by any suitable pressure sensor known in the art, for example a pressure gauge as available from Mensor.

The fuel 5 may comprise a by-product gas 115 from a pressure swing adsorber 100 and a supplemental fuel 118. By-product gas from a pressure swing adsorber is often called pressure swing adsorber tail gas, and supplemental fuel is often called trim fuel. The by-product gas 115 and supplemental fuel 118 may be heated before being used as fuel 5. By-product gas 115 and supplemental fuel 118 may be blended and introduced together through a burner to the combustion section, or they may be introduced separately through different ports in the burner. Alternatively, the by-product gas may be introduced through the primary burner and the supplemental fuel may be introduced through lances near the burner.

The oxidant gas 3 is a gas containing oxygen and may be air, oxygen-enriched air, oxygen-depleted air such as gas turbine exhaust, industrial grade oxygen, or any other oxygen-containing gas known for use in a reformer furnace for combustion. For example, as shown in FIGS. 1 and 2, air 130 may be compressed in forced draft fan 135, heated by combustion product gas 35 in the convection section 45, and passed to the reformer furnace as oxidant gas 3.

Combustion product gas 35 may heat a number of different process streams in the convection section 45 of the reformer furnace 10. The combustion product gas 35 may heat the streams in various different configurations (order of heating).

FIG. 1 shows the combustion product gas 35 heating the reformer feed gas mixture 15, followed by superheating the steam 227 from steam drum 221. A portion of the superheated steam may be used to form the reformer feed gas mixture 15 and another portion used to form a steam product 150 (i.e. export steam). The combustion product gas then heats a portion of boiler feed water 122 from steam drum 221 to form a two-phase mixture of steam and water of which at least a portion is returned to the steam drum 221. The combustion product gas then heats the combustion oxidant 3. The combustion product gas 35 may then be passed to an induced draft fan 140 and exhausted.

FIG. 2 shows the combustion product gas 35 heating the reformer feed gas mixture 15, followed by superheating the steam 125 from steam drum 121. A portion of the superheated steam may be used to form the reformer feed gas mixture 15 and another portion used to form a steam product 150 (i.e. export steam). After heating the steam, the combustion product gas then heats a portion of boiler feed water 122 from steam drum 121 in a heat exchanger to form a two-phase mixture of steam and water of which at least a portion is returned to the steam drum 121. The combustion product gas then heats boiler feed water from steam drum 120 to form a two-phase mixture of steam and water of which at least a portion is returned to steam drum 120. The combustion product gas then heats the combustion oxidant 3. The combustion product gas 35 may then be passed to an induced draft fan 140 and exhausted.

Water to make steam in a hydrogen production facility typically comes from process condensate formed from water in the reformate stream 25 and make-up water 85.

In processes for producing steam in a steam-hydrocarbon reforming facility, as shown in FIG. 1 and FIG. 2, after passing through the heat exchanger network 70, reformate 25 is further cooled in trim cooler 81 in an amount effective to condense at least a portion of the water in the reformate 25 to form condensed water and a water-depleted reformate.

The steam system comprises separator 90 of the steam-hydrocarbon reforming facility. The process for producing steam comprises separating the condensed water from the water-depleted reformate in separator 90 thereby forming a water-depleted reformate gas 95 and a process (water) condensate. Separator 90 separates condensed water from reformate 25, which contains water, to form the water-depleted reformate gas 95 and the process condensate 96 from the reformate 25. The process condensate 96 contains dissolved CO₂. The water condensate 96 may also contain traces of one or more of ammonia, methanol, ethanol, formic acid, and acetic acids. The water condensate 96 may have a temperature ranging from 27°C to 60°C (80°F to 140°F) and a pressure ranging from 205 kPa to 4240 kPa absolute (15 to 600 psig), preferably ranging from 1135 kPa to 2860 kPa absolute (150 to 400 psig).

As part of the hydrogen production process, at least a portion of the water-depleted reformate gas 95 is passed as a pressure swing adsorption unit feed to pressure swing adsorption unit 100 and separated therein to form hydrogen product gas 105 and pressure swing adsorption unit by-product gas 115.

The steam system comprises a steam stripping unit 210 (FIG. 1), 110 (FIG. 2) for stripping CO₂ from the process condensate 96. The steam stripping unit is operatively disposed to receive the process condensate from the separator 90. The process for producing steam comprises passing the process condensate 96 to the steam stripping unit 110, 210, stripping at least CO₂ from the process condensate 96, and withdrawing a CO₂-depleted process condensate 97, 197 from the steam stripping unit 110, 210. The steam stripping unit may be a process condensate stripper 210 as shown in FIG. 1, or a deaerator 110 as shown in FIG. 2. As used herein a "steam stripping unit" is any known device for stripping CO₂ from water using steam. A CO₂-containing by-product 218, 18 is withdrawn from the steam stripping unit 210, 110. In FIG. 1, the CO₂-containing steam by-product 218 is introduced into the reformer feed gas mixture 15. In FIG. 2, the CO₂-containing steam by-product 18 from the deaerator 110 is shown to be vented.

Deaerators are well-known in the chemical process industry. The deaerator may be a tray-type or a spray type deaerator. Any suitable deaerator can be used. Deaerators use steam to strip dissolved gases from the water.

To reduce VOC emissions from the steam-hydrocarbon reforming facility, the deaerator vent stream(s) 18 from deaerator 110 may be injected into the reformer furnace 10 as described in the "Report on Emission Limits for Rule 1189 - Emissions from Hydrogen Plant Process Vents," South Coast Air Quality Management District, June 7, 2001 (http//www3.aqmd.gov/hb/attachments/2002/020620b.doc), and "Final Environmental Assessment: Proposed Rule 1189 - Emissions from Hydrogen Plant Process Vents" SCAQMD No. 1189JDN021199, South Coast Air Quality Management District December 17, 1999 (http://www.aqmd.gov/docs/default-source/ceaa/documents/aamd-proiects/2000/final-ea-for-proposed-amended-rule-1189.doc?sfvrsn=4).

The steam system comprises a membrane separation unit 50 for removing O₂ from demineralized make-up water 85. The process for producing steam comprises passing demineralized make-up water 85 to membrane separation unit 50 to remove at least O₂ from the demineralized make-up water to form an O₂-depleted demineralized make-up water 86. In case the demineralized make-up water 86 also contains CO₂, CO₂ may also be removed. In the process for producing steam, preferably no CO₂-depleted process condensate is passed to the membrane separation unit 50. The contaminants in the process condensate may be incompatible with the membranes in the membrane separation unit 50.

The membrane separation unit 50 contains one or more membrane units to promote the mass transfer of O₂ out of demineralized water. Membranes may be manufactured as hollow fibers and packaged as membrane bundles, or flat sheets, packaged as spiral wound or plate and frame units. A preferred embodiment is hollow fiber membrane units. Suitable hollow fiber membrane units include membrane contactors commercially available from 3M™ Liqui-Cel™, or PermSelect®. Other suitable membrane units include those containing hollow fiber membranes made from polymers. Examples of polymers used to make membranes include, but are not limited to, polystyrene, polysulfone, polyethersulfone, polyvinyl fluoride, polyvinylidene fluoride, polyether ether ketone, polycarbonate, polyphenylene oxide, polyethylene, polypropylene, cellulose acetate, polyimide (such as Matrimid® 5218 or P-84), polyamide, polyvinyl alcohol, polyvinyl acetate, polyethylene oxide, polydimethylsiloxane, copolymers, block copolymers, or polymer blends. The hollow fiber membranes may be porous or nonporous or may contain a porous support with a nonporous coating. The coating may be applied to the inner or outer surface of the hollow fiber.

A plurality of hollow fiber membranes creates a membrane bundle, which is held together at one or both ends by a tubesheet made of thermoplastic or thermoset materials. Examples of tubesheet materials include cured epoxy or polyurethane-based formulations. The hollow fiber membrane bundle can be housed in a vessel, which may range in diameter from 25.4 mm to 254 mm (1 to 10 inches) and vary in length from 305 mm to 3050 mm (1 to 10 feet). The vessel may be constructed of plastic, metal or other suitable materials. The vessel will have at least one fluid inlet port in fluid flow communication with the shell side of the hollow fiber membranes and one fluid exit port also in fluid flow communication with the shell side of the hollow fiber membranes. The vessel will have at least one port in fluid flow communication with the bore side of the hollow fiber membranes and may have another port in fluid flow communication with the opposite end of the hollow fiber membrane. The tubesheet serves to separate the bore side fluids from the shell side fluids. The liquid may be introduced to the shell side of the membrane and the gas on the bore side, or vice versa.

The membrane separation unit 50 may be a multistage membrane separation unit comprising a plurality of membrane stages, and the membrane stages may be arranged in series or in parallel.

The membrane separation unit 50 comprises membranes having a gas (permeate) side and a liquid (non-permeate) side. The demineralized make-up water contacts the liquid side and the O₂ is removed from the gas side.

The process for producing steam may comprise purging the gas side of the membranes with a sweep gas 51. The sweep gas may be nitrogen, preferably with a concentration greater than 99.99 vol.% N₂. The sweep gas may contain less than 10 ppm O₂. Industrial grade liquid N₂ generally meets the criteria for the N₂ sweep gas. Alternatively or in addition, the gas side of the membranes may be evacuated to an absolute pressure less than 13.32 kPa (100 mm Hg) or 6.66 kPa (50 mm Hg). A vacuum producing unit, for example, a vacuum pump or the like, may be used to evacuate the gas side to the desired pressure. The combination of evacuation with sweep gas is a so-called "sweep-assisted vacuum" described, for example, in "Design & Operating Guidelines for Liqui-Cel® Extra-Flow Membrane Contactors," 3M, 2016.

The use of an oxygen-lean sweep gas or low pressure on the gas side of the membrane separation unit provides the driving force for the transfer of O₂ out of the demineralized make-up water. For the case of N₂ sweep gas, effluent gas 52 from the membrane separation unit 50, still containing primarily N₂, can be used for plant purging needs, such as flare purging, compressor seals, etc.

The treatment of raw water to make demineralized make-up water 85 suitable for the boiler feedwater system is well-known in the art. Suspended solids may be removed by settling and decantation and/or by filtering. The water may be chemically treated and/or cation exchanged to remove hardness. The water may be demineralized for complete removal of dissolved solids. Water treatment for boiler feedwater is described in Mark's Mechanical Engineers Handbook, 6th Edition, Theodore Baumeister, Editor, McGraw-Hill Book Company, 1958, p. 9-46 to 9-52.

Use of the membrane separation unit 50 to remove O₂ from the demineralized make-up water does not require steam or preheating of the demineralized make-up water like the deaerator requires. Energy and water losses associated with the deaerator steam vent are eliminated. The membrane separation unit requires less integration with the steam-hydrocarbon reforming process and therefore provides more flexibility in the overall system design. As compared to a deaerator vessel that is 12 to 15 meters tall, a membrane separation unit is only 1.5 to 3 meters tall. The membrane separation unit can be assembled on a skid and delivered to the steam-hydrocarbon reforming facility, minimizing field work.

The steam system comprises one or more heat exchangers 70 for heating the CO₂-depleted process condensate from the steam stripping unit 110, 210 and the O₂-depleted demineralized make-up water from the membrane separation unit 50. The process for producing steam comprises heating the CO₂-depleted process condensate 97, 197 and the O₂-depleted demineralized make-up water 86 by indirect heat exchange with reformate 25. The CO₂-depleted process condensate and the O₂-depleted demineralized make-up water 86 may be combined and heated together or heated separately and then combined.

The steam system comprises a steam drum 120, 221 for producing product steam 127, 227 from the CO₂-depleted process condensate and a portion or all of the O₂-depleted demineralized make-up water. The process for producing steam comprises passing the CO₂₋depleted process condensate 97, 197 and a portion or all of the O₂-depleted demineralized make-up water 86 to the steam drum 120, 221 to produce product steam 127, 227.

In the segregated steam system shown in FIG. 2, the steam system comprises a second steam drum 121 to produce a second product steam 125. In this case, not all (but only a first portion 88) of the O₂-depleted demineralized make-up water is passed to steam drum 121. A second portion 87 of the O₂-depleted demineralized make-up water is passed to the second steam drum 121 to produce a second product steam 125. Export steam 150 is formed only from the second product steam 125. The boiler feed water fed to the second steam drum 121 contains only O₂-depleted demineralized make-up water and noteably, no process condensate. It means that no chemical impurities from the process condensate will contaminate the export steam. Export steam is steam that is exported from (not used in) the steam-hydrocarbon reforming facility.

### Example

A comparison is made for a hydrogen production facility having an integrated steam system as shown in FIG. 1. For the comparative case, the membrane separation unit 50 is replaced by a deaerator. In both cases, air is preheated to 239°C in a single stage air preheater. Results are calculated using commercial simulation software, Aspen Plus®.

The feed and the fuel to the catalytic steam-hydrocarbon reformer are the same for both cases. The reformate 25 flow from the catalyst-containing tubes is the same for both cases. The combustion product gas 35 flow is the same for both cases.

The amount of steam exported is increased by 1% for the case with the membrane separation unit. This is because preheating of the demineralized make-up water is not necessary for the membrane separation unit case, and steam injection, which is required for the deaerator to remove dissolved gases, is not necessary for the membrane separation unit case.

The comparative case has steam venting from the deaerator, whereas membrane separation unit does not have steam venting.

The plant efficiency is improved by 29.8 kJ/nm³ of hydrogen produced, due at least in part to the steam vent loss for the deaerator case and no steam vent loss in the membrane separation unit case.

In addition to the plant efficiency improvement, the case with the membrane separation unit has reduced capital costs and reduced on-site construction costs.

## Claims

1. A process for producing steam in a steam-hydrocarbon reforming facility, the process comprising:
cooling a reformate (25) containing water in an amount effective to condense at least a portion of the water in the reformate (25) and thereby forming condensed water and water-depleted reformate;
separating the condensed water from the water-depleted reformate in a separator (90) thereby forming a water-depleted reformate gas (95) and a process condensate (96), the process condensate (96) formed from the condensed water;
passing the process condensate (96) to a steam stripping unit (110, 210), stripping at least CO₂ from the process condensate (96), and withdrawing a CO₂-depleted process condensate (97, 197) from the steam stripping unit (110, 210);
passing the CO₂-depleted process condensate (97, 197) to a steam drum (120, 221) to produce a product steam (127, 227);
passing demineralized make-up water (85) to a membrane separation unit (50) to remove at least O₂ from the demineralized make-up water to form an O₂-depleted demineralized make-up water (86); and
passing a first portion (88) or all of the O₂-depleted demineralized make-up water (86) to the steam drum (120, 221) to produce the product steam (127, 227);
wherein the CO₂-depleted process condensate (97, 197) and the O₂-depleted demineralized make-up water (86) are each heated by indirect heat exchange with reformate prior to being introduced into the steam drum (120, 221).

2. The process as claimed in claim 1 wherein not all of the O₂-depleted demineralized make-up water is passed to the steam drum (120, 221), the process further comprising:
passing a second portion (87) of the O₂-depleted demineralized make-up water to a second steam drum (121) to produce a second product steam (125).

3. The process as claimed in claim 2 wherein at least a portion of the second product steam (125) is exported from the steam-hydrocarbon reforming facility.

4. The process as claimed in any one of claims 1 to 3 wherein no CO₂-depleted process condensate is passed to the membrane separation unit (50).

5. The process as claimed in any one of claims 1 to 4 wherein the first portion or all of the O₂-depleted demineralized make-up water (86) and the CO₂₋depleted process condensate (97, 197) are combined before being heated by indirect heat exchange with the reformate (25).

6. The process as claimed in any one of claims 1 to 4 wherein the first portion or all of the O₂-depleted demineralized make-up water (86) and the CO₂₋depleted process condensate (97, 197) are heated separately prior to being introduced into the steam drum (120, 221).

7. The process as claimed in any one of claims 1 to 6 wherein the membrane separation unit (50) comprises membranes having a gas side and a liquid side, wherein the demineralized make-up water contacts the liquid side and the O₂ is removed from the gas side, the process further comprising
purging the gas side of the membranes with a sweep gas, wherein the sweep gas is preferably nitrogen.

8. The process as claimed in claim 7 further comprising:
evacuating the gas side of the membranes to an absolute pressure less than 13.32 kPa (100 mm Hg) or less than 6.66 kPa (50 mm Hg).

9. The process as claimed in any one of claims 1 to 6 wherein the membrane separation unit comprises membranes having a gas side and a liquid side, wherein the demineralized make-up water contacts the liquid side and the O₂ is removed from the gas side, the process further comprising
evacuating the gas side of the membranes to an absolute pressure less than 13.32 kPa (100 mm Hg) or less than 6.66 kPa (50 mm Hg).

10. A steam system in a steam-hydrocarbon reforming facility, the steam system comprising:
a separator (90) for separating condensed water from a reformate that contains water to form a water-depleted reformate gas and a process condensate from the reformate;
a steam stripping unit (110, 210) for stripping CO₂ from the process condensate from the separator (90) to form a CO₂-depleted process condensate and a CO₂-containing by-product (218, 18);
a membrane separation unit (50) for removing O₂ from demineralized make-up water (85) to form O₂-depleted demineralized make-up water;
one or more heat exchangers (70) for heating the CO₂-depleted process condensate from the steam stripping unit (110, 210) and the O₂-depleted demineralized make-up water from the membrane separation unit (50) by indirect heat exchange with the reformate; and
a steam drum (120, 221) for producing a product steam (127, 227) from the CO₂-depleted process condensate and a first portion or all of the O₂-depleted demineralized make-up water from the one or more heat exchangers (70).

11. The steam system as claimed in claim 10 further comprising:
a second steam drum (121) for producing a second product stream (125) from a portion of the O₂-depleted demineralized make-up water from the one or more heat exchangers (70).

12. The steam system as claimed in claim 10 or claim 11 wherein the membrane separation unit comprises membranes having a gas side and a liquid side, wherein the demineralized make-up water contacts the liquid side and the O₂ is removed from the gas side, the steam system further comprising
a sweep gas source, preferably a nitrogen source, wherein the gas side of the membranes is in fluid flow communication with the sweep gas source.

13. The steam system as claimed in any one of claims 10 to 12 wherein the membrane separation unit comprises membranes having a gas side and a liquid side, wherein the demineralized make-up water contacts the liquid side and the O₂ is removed from the gas side, the steam system further comprising
a vacuum-producing unit, wherein the gas side of the membranes is in fluid flow communication with the vacuum-producing unit.

14. The process as claimed in any one of claims 7 to 10 or the steam system as claimed in claim 10 or claim 13 wherein the membranes are hollow fiber membranes.
